# EUROPÄISCHE PATENTSCHRIFT

(11) **EP 2 622 048 B1**
(45) Veröffentlichungstag und Bekanntmachung des Hinweises auf die Patenterteilung: **29.11.2017**
(21) Anmeldenummer: 11779085.7
(22) Anmeldetag: 28.09.2011
(51) Int. Cl.: C10K 1/02, C10B 47/44, C10B 53/02, C10B 57/18

(54) **PYROLYSEREAKTOR UND VERFAHREN ZUR ERZEUGUNG VON HOCHWERTIGEN PARTIKELFREIEN PYROLYSE- UND SYNTHESEGASEN**
PYROLYSIS REACTOR AND METHOD FOR PRODUCING HIGH-QUALITY PARTICLE-FREE PYROLYSIS AND SYNTHESIS GASES
RÉACTEUR DE PYROLYSE ET PROCÉDÉ DE PRODUCTION DE GAZ DE PYROLYSE ET DE SYNTHÈSE DE HAUTE QUALITÉ EXEMPTS DE PARTICULES

(30) Priorität: 01.10.2010 DE 102010047320
(43) Veröffentlichungstag der Anmeldung: 07.08.2013
(73) Patentinhaber: Karlsruher Institut für Technologie, 76131 Karlsruhe (DE)
(72) Erfinder: LEIBOLD, Hans, 76316 Malsch-Waldprechtsweier (DE); MAI, Robert, 76185 Karlsruhe (DE); SEIFERT, Helmut, 67069 Ludwigshafen (DE); RICHTER, Frank, 66386 Sankt Ingbert (DE)
(86) Internationale Anmeldenummer: PCT/EP2011/004842
(87) Internationale Veröffentlichungsnummer: WO 2012/041489

(56) Entgegenhaltungen:
- WO-A1-01/34725
- WO-A1-2007/017005
- WO-A2-2008/135226
- DE-A1- 4 113 217
- DE-A1-102004 008 621

## Beschreibung

Die Erfindung betrifft einen Pyrolysereaktor sowie ein Verfahren zur Erzeugung von hochwertigen partikelfreien Pyrolyse- und Synthesegasen gemäß des ersten bzw. des sechsten Patentanspruchs. Bei einer Pyrolyse, d.h. einer thermischen Zersetzung von organischen Materialien unter Luftabschluss entstehen fester Pyrolysekoks, flüssige Pyrlyseöle sowie gas- und/oder dampfförmige Pyrolysegase, d.h. in Praxi grundsätzlich ein Gas-Dampfgemisch und ein fester Rückstand. Mit dem gasförmigen Gemisch werden jedoch auch feine Koks- und Aschepartikel ausgetragen. Menge und Zusammensetzung hängen dabei erheblich von den Pyrolysebedingungen ab.
Ein Austrag von Partikeln in einem Gas oder Dampf verursacht in den nachfolgenden Teilprozessen wie auch im Gesamtprozess der Weiterverarbeitung der vorgenannten Pyrolyseprodukte wie z.B. einer Nachvergasung verfahrenstechnische Probleme. Insbesondere mineralische Bestandteile der Partikel wirken katalytisch auf die dampfförmigen reaktiven Species in den Pyrolysedämpfen. Diese Reaktionen können in gleicher Weise auch in den kondensierten Pyrolyseflüssigkeiten stattfinden. Dabei entstehen teerartigen Verbindungen, die insbesondere die Lagerstabilität von Pyrolyseölen signifikant herabsetzen. Die dabei entstehenden organischen Partikel und mineralische Bestandteile können dabei mit kondensierenden Pyrolysedämpfen Rohrleitungen dauerhaft verstopfen und damit den Gesamtprozess behindern oder ganz unterbinden.
Ferner behindern oder beeinflussen Partikel in Pyrolysedämpfen auch dadurch dessen Kondensation, indem sie die Bildung von Ablagerungen in Leitungen oder Kondensatoren fördern und damit ein Abfließen der Kondensate verhindern.
Folglich wird eine möglichst frühzeitige Abtrennung der Partikel aus dem Gas-Dampfgemisch angestrebt.

In [1] wird hierzu ein oder mehrere Zyklonabscheider vorgeschlagen, der einem Pyrolysereaktor unmittelbar nachgeschaltet wird und durch den der gesamte Volumenstrom an Pyrolysegas und / oder Pyrolysedämpfen hindurch geleitet und Feststoffpartikel noch bei hohen Temperaturen abgeschieden werden.

Der Vorteil von Zyklonabscheider ist deren robuster Aufbau und Unempfindlichkeit im Betrieb. Sie eignen sich auch für klebrige Partikel oder Partikelagglomerate besonders mit Größen auch oberhalb 10µm. Sie stoßen bei kleinen Partikeln jedoch schnell an ihre Grenzen. Mit zunehmender Feinheit der Partikel besonders bei Partikelgrößen unter 1µm nimmt der Abscheidegrad rapide ab. Ferner zeigt der Abscheidegrad von Zyklonabscheidern eine prinzipbedingte Lastabhängigkeit. Vor allem bei Teillastbetreib des Pyrolysereaktors ist mit nur mit einem deutlich reduzierten Abscheidegrad zu rechnen. Weiterhin setzen die für den Betreib von Zyklonabscheider prinzipbedingt hohen Strömungsgeschwindigkeiten der Integration in einen Pyrolysereaktor enge Grenzen.

Aus [2] ist zudem röhren- oder kerzenförmige Filterelemente bekannt, die ebenfalls, unmittelbar einem Pyrolysereaktor nachgeschaltet, Feststoffpartikel bereits bei hohen Temperaturen abscheiden. Die Filterelemente bestehen dabei aus metallischen oder keramischen Werkstoffen und müssen in regelmäßigen Abständen abgereinigt werden.

Die genannten röhren- oder kerzenförmige Filterelemente sind Filter, die sich je nach Auslegung auch für eine Abscheidung kleiner Partikel eignen und zwar in vorteilhafter Weise in gewissen Betriebsbereichen unabhängig von der Strömungsgeschwindigkeit. Klebrige Partikel oder Partikelagglomerate führen jedoch zu einem sehr zügigen Zusetzen der Filterflächen. Filter-flächen und damit die Filterelemente sind folglich geometrisch groß zu dimensionieren. Eine Anordnung der Filter direkt im Gasauslass des Pyrolyseofens ermöglicht zwar eine Abreinigung bei erhöhten Temperaturen und damit erhöhte Standzeiten, verhindert jedoch nicht die heterogene katalytischen Reaktionen der Gas-/Dampfphase und damit ein allmähliches Zusetzen der Filterflächen. WO 2007/017005 offenbart einen Pyrolysereaktor sowie ein Verfahren zur Schnellpyrolyse von Lignocellulose.

Davon ausgehend liegt die **Aufgabe der Erfindung** darin, ein Verfahren zur Erzeugung von hochwertigen partikelfreien Pyrolyse- und Synthesegasen vorzuschlagen, das die vorgenannten Einschränkungen nicht aufweist und sich insbesondere durch eine hohe Standzeit und einfache Abreinigbarkeit der verwendeten Reinigungsmittel auszeichnet. Ferner liegt eine weitere Aufgabe der Erfindung in der Schaffung der vorgenannten Reinigungsmittel.
Die Aufgabe wird mit einem Verfahren und einer Vorrichtung mit den Merkmalen des ersten und sechsten Patentanspruch gelöst. Die auf diese rückbezogenen Unteransprüche geben vorteilhafte Ausführungsformen wieder.
Eine Aufgabe wird durch einen Pyrolysereaktor und ein Verfahren zur Erzeugung von hochwertigen partikelfreien Pyrolyse- und Synthesegasen gelöst. Der Pyrolysereaktor weist einen Reaktionsraum mit einer Prozesszone in einem unteren Bereich sowie einem oberhalb der Prozesszone erweiterten Reaktionsraum mit eingesetzten Filterelementen zu einer Gasableitung als oberen Bereich auf. Die Filterelemente sind direkt in den Reaktionsraum eingesetzt und liegen damit in vorteilhafter Weise nicht nur im Wärmestrahlungsbereich der Prozesszone, sondern liegen auch oberhalb der Prozesszone im konvektiven Einflussbereich der während der Pyrolyse entstehenden heißen Pyrolysegase und - dämpfe. Ferner erreichen die heißen Pyrolysedämpfe und Pyrolysegase die Filterelemente direkt, d.h. ohne einen Kontakt mit kälteren Leitungen oder Komponenten und erfahren damit keine oder allenfalls eine reduzierte minimale Abkühlung. In vorteilhafter Weise entsteht dabei keine Kondensation oder Teerbildung, eine Ursache für ein möglicherweise beschleunigtes Zusetzen der Filterelemente.
Ein wesentliches Merkmal umfasst die Zweiteilung des Reaktionsraumes, wobei im unteren Bereich die Pyrolyse von kohlenstoffhaltigen Einsatzstoffen, vorzugsweise Biomasse stattfindet. Der vorzugsweise orthogonal darüber angeordnete Bereich stellt als oberer Bereich eine Erweiterung des Reaktionsraums dar. Er überspannt vorzugsweise die gesamte Prozesszone von oben. Die bei der Pyrolyse entstehenden heißen Pyrolysedämpfe und Pyrolysegase steigen von der Prozesszone nach oben in den darüber angeordneten erweiterten Reaktionsraum und gelangen in diesem Bereich direkt und ohne weiter erforderliche Maßnahmen zu den Filterlementen. Die Ableitung der heißen Pyrolysedämpfe und Pyrolysegase erfolgt durch die Filter in die Gasableitung, optional als Unterdruckabsaugung. Die heißen Pyrolysedämpfe und Pyrolysegase steigen aber bereits grundsätzlich konvektiv direkt zu den Filterelementen auf.

Eine Abreinigung der Filterelemente erfolgt vorzugsweise einzeln seriell durch Druckstöße in Gegenstromrichtung mit einem Spülgas während des laufenden Betriebs, d.h. bei erhöhter Temperatur im Einflussbereich der konvektiven Gasanströmung und Wärmestrahlung durch den Pyrolyseprozess. Damit befinden sich insbesondere die schwer zu entfernenden teerhalten Substanzen der Filterbelegung in einem möglichst dünnflüssigen Zustand und lassen sich mit einem reduzierten Aufwand wirksam entfernen. Die Abreinigung durch Gegenstrom Jet-Pulstechnik (z.B. sog. CPP-Verfahren) lässt sich durch ein reingasseitigen Hinzudosieren von Lösungsmittel (für die Lösung der Substanzen) Katalysator und/oder flüssigen oder gasförmigen Brennstoff (zum zusätzlichen Ausbrennen) in den Jetpuls vor dem Durchtritt durch das Filterelement oder durch Reaktionsraumseitige Heizvorrichtungen wie Brenner oder integrierte Widerstandsheizelemente beschleunigen. Als Spülgase sind auch zuvor dem Reaktionsraum entzogene abgereinigte Pyrolyse- oder Synthesegase einsetzbar, wobei der Heizwert dieser Gase sowohl für das Ausbrennen als auch für eine Pyrolysesteuerung nutzbar ist.

Eine Lösung der Aufgabe besteht folglich in der Integration eines Heißgasfilters in den Pyrolysereaktor. Soll dieser im Rahmen einer kontinuierlichen Pyrolyse (d.h. nicht im Batchbetrieb) Verwendung finden, weist dieser vorzugsweise Förder-mittel für den Transport von zu pyrolysierenden Stoffen wie kohlenstoffhaltigen Einsatzstoffen wie bevorzugt Biomasse oder aber auch mit ebensolchen verunreingten und zu reinigenden Stoffen wie z.B. Elektroschrott oder Verbundwerkstoffe in der Prozesszone auf. Der Transport umfasst im einem kontinuierlichen Verfahren auch ein Ein- und Ausschleusen der Einsatzstoffe bzw. Pyrolysekoks und/oder Pyrolysekondensat, vorzugsweise auch die Funktion einer Schleuse gegen einen Gasaustausch in und aus dem Reaktionsraum, insbesondere zur Vermeidung eines Einströmens von Sauerstoff in den Reaktionsraum.

Die Fördermittel umfassen mindestens eine Förderschnecke, vorzugsweise in der Form von Einfachschnecken oder ineinander greifenden Doppelschnecken. Die Ausführung umfasst eine Unterteilung des Reaktionsraums in mehrere hintereinander angeordnete Reaktionszonen. Diese erstrecken sich über jeweils einen Abschnitt der Prozesszone (unterer Bereich, mit Fördermittel) und über den darüber liegenden Abschnitt des erweiterten Reaktionsraums mit eingesetzten Filterelementen (oberer Bereich). Durch die Fördermittel wird das Prozessgut nacheinander durch die Reaktionszonen transportiert, wobei die jeweils entstandenen Pyrolyse oder Synthesegase je Reaktionszone sequentiell abziehbar sind. Die Unterteilungen zwischen den Reaktionszonen sind hierzu im oberen Bereich vorzugsweise durch Platten oder Bleche als Gas und / oder Strahlungsbarrieren realisierbar.
Bei gleichen Pyrolysetemperaturen und -atmosphären (Pyrolysebedingungen) in allen Reaktionszonen lassen sich durch einen sequenziellen Abzug Pyrolysegase oder Synthesegase mit unterschiedlichen Pyrolysezeiten und damit unterschiedlichen Umsetzungen erzeugen und z.B. zur Konfektionierung eines definierbaren Pyrolysegasgemisches oder auch für Spülgase oder Spülgasbestandteile für die Filterabreinigung in jeweils anderen Reaktionszonen heranziehen. Alternativ sind in den vorgenannten Reaktionszonen unterschiedliche Pyrolysebedingungen einstellbar, d.h. je Reaktionszone sind Pyrolysegase oder Syntehsegase unterschiedlicher Zusammensetzung entnehmbar. Beispielsweise lassen sich dadurch in einer der ersten Reaktionszonen mit einer geringeren Pyrolysetemperatur ein unvollständig umgesetztes Synthesegas abziehen und als Spülgas für die Filterabreinigung in einer nachfolgenden Reaktionszone heranziehen.

Der Reaktionsraum wird vorzugsweise durch Heizelemente oder Brenner indirekt beheizt, unterstützt durch eine optionale intrinsische Heizung der Fördermittel (z.B. innenbeheizte Förderschnecke), wobei feste oder flüssige Wärmeträger mit dem Prozessgut vermischt eine bevorzugt isotherme Wärmeübertragung auf das zu pyrolysierende Prozessgut sicherstellen. Feste Wärmeträger sind vorzugsweise massive oder mit einem bei Pyrolysetemperatur erstarrenden Medium gefüllte Stahlkugeln oder andere Partikel. Flüssige Wärmeträger sind vorzugsweise Salze, die als Partikel beigemengt ebenso einen Phasenübergang bei einer Pyrolysetemperatur aufweisen.

Eine segmentweise Heizung für jede Reaktionszone und / oder segmentweise individuelle Fördermittel wie z.B. durchgehende Schnecken mit segmentweise individueller Schneckensteigung oder unterteilte Schnecken mit unterschiedlicher Drehzahl dienen als zusätzliche Mittel zur Reaktionszonenweise individuelle Pyrolysesteuerung.

Die Erfindung wird im Folgenden anhand einer beispielhaften Ausführungsform mit den folgenden Figuren näher beschrieben. Die vorgenannten allgemein beschriebenen Maßnahmen sind einzeln oder als Kombination im Rahmen der Erfindung mit dieser Ausführungsform kombinierbar. Es zeigt

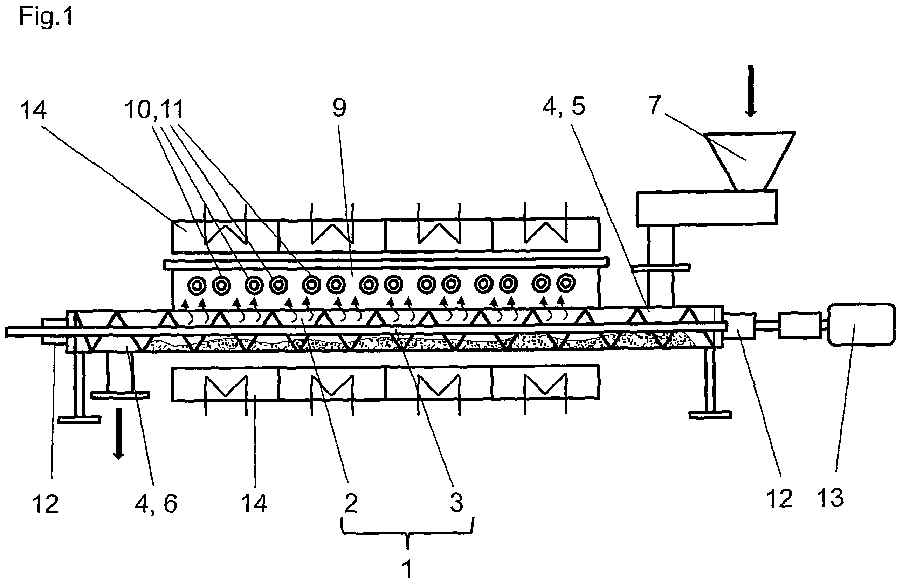

**Fig.1** eine prinzipielle Teilschnittansicht einer Ausführungsform eines Pyrolysereaktors mit einer Förderschnecke.

Die in **Fig.1** dargestellte Ausführungsform eines Pyrolysereaktors weist einen Reaktionsraum **1** auf, in dessen unteren Bereich (Trog) die Prozesszone **2** eine Förderschnecke **3** (Trogschneckenförderer) für den Transport von festen Einsatzstoffen sowie Pyrolyseprodukten angeordnet ist. Vertikal oberhalb der gesamten Prozesszone erstreckt sich der erweiterte Reaktionsraum **9** mit horizontal eingesetzten Filterkerzen **10** zur Abreinigung der sich dort sammelnden gas- oder dampfförmigen Pyrolyseprodukte. Um den Reaktor sind Heizmittel **14** (durch Brenner oder wie dargestellt, elektrische, induktive oder Mikrowellen Heizelemente in der Wandung und/oder in der Schnecke) zur Einhaltung der Pyrolysetemperatur in der Prozesszone sowie eine Ableitung für die gefilterten gas- oder dampfförmigen Pyrolyseprodukte an den Gasaustritten **11.** Alternativ zur genannten Heizung ist ein Wärmeeintrag auch über Wärmeübertragungspartikel (Sand oder Metallpartikel, Kugeln etc.) vorzugsweise gemeinsam mit den die Prozesszone durchlaufenden festen Einsatzstoffen.

Die Förderschnecke wird beidseitig der Prozesszone in je einem einseitig geschlossenen Rohrsegment **4** geführt, die jeweils als Eintrittschleuse **5** für die zu pyrolysierenden Einsatzstoffe und als Austrittsschleuse **6** für feste oder flüssige Pyrolyseprodukte dienen und jeweils einen Feedeintrag **7** bzw. einem Koksaustrag **8** versehen sind. Ferner ist jeweils am geschlossenen Rohrende je eine Lagerung **12** für die Förderschnecke vorgesehen. An der prinzipiell kühleren Eintrittschleuse **5** ist zudem ein Schneckenantrieb **13** angeflanscht.

Die Förderschnecken füllen die gesamte bevorzugt von außen beheizte Prozesszone **2** des Reaktionsraums **1** bis auf einen schmalen Spalt aus. Die Filterelemente werden dabei unmittelbar oberhalb der Förderschnecke angeordnet. Röhrenförmige Filterelemente oder einseitig geschlossene Filterkerzen **10** werden für eine gute Raumausnutzung und für die Erfassung der gesamten Erstreckung des Volumen oberhalb der Prozesszone vorzugsweise senkrecht zur Schneckenachse, alternativ auch parallel dazu horizontal angeordnet. Damit wird das gesamte Reaktorvolumen minimal gehalten und die Verweilzeit des partikelbeladenen Pyrolysegases im Reaktionsraum minimiert. Die Filterelemente münden mit ihren reingasseitigen Gasaustritten **11** bevorzugt in nicht dargestellten Sammler jeweils für ein oder mehrere Filterelemente aus.

Wesentlich ist dabei, dass die Filtration unmittelbar bei Prozesstemperatur stattfindet, um ein Auskondensieren klebriger Teere zu reduzieren oder unterbinden. Daher ist in einer weiteren Ausführungsform der gesamte Pyrolysereaktor von außen beheizbar, wobei je nach Prozessbedingungen und zu pyrolysierenden Einsatzstoffe zusätzlich auch Schneckenwelle und Schneckenblatt der Förderschnecken beheizt werden, um die zur Pyrolyse notwendige Energie extern und ausreichend schnell bereitzustellen.
Vorzugsweise erfolgt die Wärmezufuhr auch über ein Phasenübergangsmedium fest/flüssig (z.B. in Metallkugeln oder als Salzschmelze) oder durch Nassdampf in sog. Wärmeohren direkt in der Prozesszone, wobei die Phasenübergangstemperatur vorzugsweise der angestrebten Pyrolysetemperatur entspricht. Damit kann eine lokale Überhitzung, verbunden mit Verkokungserscheinungen an den wärmeübertragenden Oberflächen vermieden werden.
Zur Absaugung einzelner Gasfraktionen können mehrere Filterelemente an- und/oder abstromseitig zusammengefasst und der erweiterte Reaktionsraum räumlich aufgeteilt werden, um Fraktionen mit hohem Inertgasanteil oder heizwertreiche Gase getrennt zu erfassen. Damit ist auch die Möglichkeit gegeben, mit einer vorgegebenen Temperaturstufung zu fahren.
Die Abreinigung der Filterelemente erfolgt vorzugsweise über Gegendruckimpulse, d.h. nach dem sog. CPP-Verfahren. Eine simultane Abreinigung fördert, unterbrochen jeweils durch die Abreinigungsimpulse eine ansonsten gleichförmige Abreinigung über die gesamte Länge des Reaktionsraums.
Bei serieller Abreinigung der Filterelemente werden jene in einer bevorzugt geordneten Reihenfolge einzeln oder gruppenweise nacheinander durch Gegendruckimpulse abgereinigt. Die Reihenfolge muss dabei nicht der Reihenfolge der Anordnung entsprechen.
Zur Durchführung der Abreinigung weisen die Filterelemente jeweils eine vorzugsweise ventilgesteuerte Einblasvorrichtung auf, wobei über ein Ventil eine, aber auch mehrere Einblasvorrichtungen zugleich ansteuerbar sind.

### Literatur:

[1] Bayerbach R.: Die ablative Flashpyrolyse der PYTEC -Erste Erfahrungen und Produkteigenschaften; FNR- Fachgespräch Bio-Crude-Oil Gülzow 18.-19. September 2007 sowie Gülzower Fachgespräche, Bd.28 (2008), Biocrudeoil, S. 87ff, Hg. Fachagentur Nachwachsende Rohstoffe e.V. (FNR), Gülzow
[2] Mai, R.; Leibold, H.; Seifert, H.: Hot Gas Filtration and Haloclean Pyrolysis Process Operation Experience and Scale-up; 7th Int. Symp. on Gas Cleaning at High Temperatures (GCHT-7), Newcastle, AUS, June 23-25, 2008

### Bezugszeichenliste

- 1: Reaktionsraum
- 2: Prozesszone
- 3: Förderschnecke
- 4: Rohrsegment
- 5: Eintrittschleuse
- 6: Austrittsschleuse
- 7: Feedeintrag
- 8: Koksaustrag
- 9: erweiterte Reaktionsraum
- 10: Filterkerzen
- 11: Gasaustritt
- 12: Lagerung
- 13: Schneckenantrieb
- 14: Heizmittel

## Patentansprüche

1. Pyrolysereaktor zur Erzeugung von hochwertigen partikelfreien Pyrolyse- und Synthesegasen mit einem Reaktionsraum **(1)** mit einer Prozesszone **(2)** in einem unteren Bereich sowie einem oberhalb der Prozesszone erweiterten Reaktionsraum mit eingesetzten Filterelementen **(10)** zu einer Gasableitung **(11)** als oberen Bereich,
wobei
a) die Filterelemente Mittel für eine Gegendruckimpulsabreinigung mit einem Spülgas aufweisen,
b) das Spülgas Pyrolyse- oder Synthesegase aus dem Pyrolysereaktor sind,
c) die Prozesszone Fördermittel **(3)** für feste Bestandteile aufweist sowie,
d) die Fördermittel durch mindestens eine Förderschnecke (3) gebildet wird,
**dadurch gekennzeichnet, dass**
e) der Reaktionsraum Unterteilungen in mehrere hintereinander angeordnete Reaktionszonen aufweist und Mittel für einen sequenziellen Abzug der Pyrolyse- oder Synthesegase für jede Reaktionszone separat vorgesehen sind sowie
f) die mindestens eine Förderschnecke sich über die Prozesszone unterhalb des gesamten Reaktionsraums nacheinander über alle Reaktionszonen erstreckt.

2. Pyrolysereaktor nach Anspruch 1, **dadurch gekennzeichnet, dass** der Reaktionsraum **(1)** ein Trogschneckenreaktor ist.

3. Pyrolysereaktor nach einem der vorgenannten Ansprüche, **dadurch gekennzeichnet, dass** die Filterelemente durch Kerzenfilterelemente **(10)** gebildet werden.

4. Pyrolysereaktor nach Anspruch 3, **dadurch gekennzeichnet, dass** die Kerzenfilterelemente horizontal in oder durch den oberen Bereich ragen.

5. Pyrolysereaktor nach Anspruch 1, **dadurch gekennzeichnet, dass** Reaktionszonen für unterschiedliche Pyrolysetemperaturen auslegbar sind.

6. Verfahren zur Erzeugung von hochwertigen partikelfreien Pyrolyse- und Synthesegasen mit einem Pyrolysereaktor nach einem der vorgenannten Ansprüche, wobei die Abscheidung von Partikeln bei Temperaturen oberhalb 90% der Pyrolysetemperatur in °C erfolgt.

## Claims

1. Pyrolysis reactor for producing high-quality particle-free pyrolysis and synthesis gases, with a reaction chamber (1) with a process zone (2) in a lower section and a reaction chamber extended above the process zone, and having filter elements (10) inserted therein towards a gas draw-off (11) as the upper section, wherein
a) the filter elements comprise means for a counter-pressure pulse cleaning with a flushing gas,
b) the flushing gas is formed from pyrolysis gases or synthesis gases from the pyrolysis reactor,
c) the process zone comprises conveying means (3) for solid constituents, and
d) the conveying means is formed from at least one worm conveyor, **characterised in that**
the reaction space comprises subdivisions into a plurality of reaction zones arranged one behind another, and means are provided separately for a sequential extraction of pyrolysis gases or synthesis gases for each reaction zone, and
the at least one worm conveyor extends, above the process zone underneath the entire reaction chamber, over all the reaction zones.

2. Pyrolysis reactor according to claim 1, **characterised in that** the reaction chamber (1) is a trough screw reactor.

3. Pyrolysis reactor according to any of the preceding claims, **characterised in that** the filter elements are formed by cartridge filter elements (10).

4. Pyrolysis reactor according to claim 3, **characterised in that** the cartridge filter elements project horizontally into or through the upper section.

5. Pyrolysis reactor according to claim 1, **characterised in that** reaction zones can be configured for different pyrolysis temperatures.

6. Method for producing high-quality particle-free pyrolysis and synthesis gases, with a pyrolysis reactor in accordance with any one of the preceding claims, wherein the separation of particles takes place at temperatures above 90% of the pyrolysis temperature in °C.

## Revendications

1. Réacteur de pyrolyse permettant l'obtention de gaz de pyrolyse et de synthèse exempts de particules de haute qualité, comprenant une chambre de réaction (1) comportant une zone de process (2) située dans sa partie inférieure ainsi qu'une chambre de réaction étendue au-dessus de la zone de process dans laquelle sont introduits des éléments filtrants (10) vers une conduite d'évacuation de gaz (11), constituant la partie supérieure, dans lequel :
(a) les éléments filtrants comportent des moyens de nettoyage par impulsions de contre-pression avec un gaz de lavage,
(b) les gaz de lavage est constitué par des gaz de pyrolyse ou de synthèse sortant du réacteur de pyrolyse,
(c) la zone de process comprend des moyens de transport (3) de composants solides, et
(d) les moyens de transport sont formés par au moins une vis transporteuse (3),
**caractérisé en ce que**
(e) la chambre de réaction comporte des subdivisions en plusieurs zones de réaction situées les unes derrière les autres, et il est prévu des moyens pour permettre un retrait séquentiel des gaz de pyrolyse ou de synthèse, séparément pour chaque zone de réaction, et
(f) la vis transporteuse s'étend sur la zone de process, au-dessous de la totalité de la chambre de réaction, successivement sur toutes les zones de réaction.

2. Réacteur de pyrolyse conforme à la revendication 1,
**caractérisé en ce que**
la chambre de réaction (1), est un réacteur à vis à auges.

3. Réacteur de pyrolyse conforme à l'une des revendications précédentes,
**caractérisé en ce que**
les éléments de filtrants sont formés par des éléments filtrants en forme de bougies (10).

4. Réacteur de pyrolyse conforme à la revendication 3,
**caractérisé en ce que**
les éléments filtrants en forme de bougie pénètrent horizontalement dans ou au travers de la partie supérieure.

5. Réacteur de pyrolyse conforme à la revendication 1,
**caractérisé en ce que**
des zones de réaction peuvent être réalisées pour différentes températures de pyrolyse.

6. Procédé d'obtention de gaz de pyrolyse et de synthèse exempts de particules de haute qualité avec un réacteur de pyrolyse conforme à l'une des revendications précédentes, selon lequel la séparation de particules est effectuée à des températures situées au-dessus 90% de la température de pyrolyse en °C.
